# EUROPEAN PATENT SPECIFICATION

(11) **EP 1 407 869 B1**
(45) Date of publication and mention of the grant of the patent: **03.06.2009**
(21) Application number: 02425618.2
(22) Date of filing: 11.10.2002
(51) Int. Cl.: B29C 45/26

(54) **Modular system for moulds of injection moulding machines**
Modulares System für Formen von Spritzgiessmaschinen
Système modulaire pour moules de machines à moulage par injection

(43) Date of publication of application: 14.04.2004
(73) Proprietor: Liteco S.R.L., 20090 Opera (Milano) (IT)
(72) Inventor: Saulle, Lorenzo, 20080 Carpiano (Milano) (IT)
(74) Representative: Petruzziello, Aldo

(56) References cited:
- EP-A- 1 052 075
- WO-A-00/38899
- WO-A-00/38900
- US-A- 3 871 611
- US-A- 5 451 156
- PATENT ABSTRACTS OF JAPAN vol. 016, no. 561 (M-1341), 3 December 1992 (1992-12-03) -& JP 04 214315 A (SANKIYOU ENJINIARINGU KK), 5 August 1992 (1992-08-05)
- PATENT ABSTRACTS OF JAPAN vol. 017, no. 433 (M-1461), 11 August 1993 (1993-08-11) -& JP 05 096573 A (FUJI XEROX CO LTD), 20 April 1993 (1993-04-20) -& DATABASE WPI Week 199320 Derwent Publications Ltd., London, GB; AN 1993-163914 XP002233210 & JP 05 096573 A

## Description

The present invention refers to a modular system for moulds of injection moulding machines.

As is known, an injection moulding machine comprises one or more moulds defining respective cavities wherein the plastic material for formation of the moulded item is inj ected.

A mould generally comprises a fixed mould half and a movable mould half which moves from a mould closed position wherein the plastic material is injected to a mould open position wherein the moulded item is ejected. Accordingly, an injection assembly of the moulding machine acts on the fixed mould half for injection of the plastic material and an ejection assembly of the moulding machine acts on the movable mould half for ejection of the moulded item.

Each mould defines a cavity designed and shaped according to the item to be moulded. Consequently, when production is changed, the entire mould and thus also the injection and ejection assemblies that interface with said mould must be changed.

When the production change requires minimal changes on the moulded item, the same mould can be maintained and changes can be made to the injection assembly, for example by changing the nozzles or the injection modalities. Alternatively, the male and female elements of the mould that define the cavity can be replaced.

Said changes are nevertheless carried out without any rule and are left to the initiative of the person skilled in the art. In any case, when substantial changes in production are to be made, the entire mould and thus the injection and ejection assemblies must be changed with a consequent excessive waste of money, time and material.

WO-A-0038900 discloses an injection moulding apparatus comprising a fixed moulding side and an ejector side which, when pressed together, form a mould assembly comprising a plurality of mould cavities, on each of which an interchangeable moulding tool is positioned.
Each interchangeable moulding tool is releasably attached to the mould assembly and comprises a fixes tool side and an ejector tool side, comprising ejection means pushed by a tool pusher bar, which in turn is pushed by ejection means belonging to the ejector side of the moulding apparatus.

US-A-5451156 discloses a mould assembly comprising means, disposed between an ejection assembly and the movable mould half, for modifying the arrangement of the ejectors of the ejector assembly.

JP-A-4214315 discloses means for changing a nozzle arrangement, said changing means do not comprising adapter means positioned between the nozzle arrangement and the fixed mould half.

The object of the present invention is to overcome the drawbacks of the prior art, providing a system for the moulds of injection moulding machines that is of the modular type.

Another object of the present invention is to provide such a moulding system that is versatile and able to be adapted to the different types of production change.

These objects are achieved in accordance with the invention with the characteristics listed in appended independent claim 1.

Advantageous embodiments of the invention are apparent from the dependent claims.

The modular system for moulds of injection moulding machines according to the invention comprises:
- an injection assembly provided with a plurality of nozzles for injecting of the plastic material into the mould,
- an ejection assembly provided with a plurality of ejectors for ejecting of the moulding from the mould, and
- a mould comprising a fixed mould half associated with said injection assembly and a movable mould half associated with said ejection assembly and movable from a mould closed position wherein the plastic material is injected into the mould and a mould open position wherein the moulding is ejected from the mould;
- female mould inserts comprising a female cavity and male mould inserts comprising a male protrusion removably mounted in appropriate seats formed respectively in a female mould plate of the fixed mould half and in a male mould plate of the mobile mould half so as to be modularly composable and decomposable, according to the moulding to be produced.

**The peculiar characteristic of the invention lies in the fact that the modular system further comprises:**
- first adapter means disposed interchangeably between said injection assembly and said fixed mould half so as to allow the arrangement of said nozzles of the injection assembly to be varied, and
- second adapter means disposed interchangeably between said ejection assembly and said mobile mould half so as to allow the arrangement of said ejectors of the ej ection assembly to be varied.

Said modular system for moulds of injection moulding machines according to the invention has various extrinsic and intrinsic advantages as listed below.

### Extrinsic qualities (seen by the user):

- Efficiency - The quality of the individual modules and components allows rational use to be achieved.
- Usability - The great flexibility of the system allows an unlimited field of application to be satisfied.
- Economy - On large numbers of product types, the reduction in costs becomes considerable.
- Accuracy - The correct execution of each component facilitates interchangeability and the highest quality requirements.

### Intrinsic qualities (seen by the designer)

- Maintainability - The interchangeability of the modules of each individual component allows replacement costs and mould-stopping times to be reduced drastically.
- Extendability - There are no limits to the possibility of application of the principle of the system according to the invention.

The system according to the invention, according to the basis of the principles of modularity, is characterised by a well structured architecture, consisting of modules that are well connected to each other. The construction of the moulds according to this methodology leads to great flexibility of operation and of configuration, together with functionality, versatility and speed of construction. Said system has the following features:
- Decomposability - The system can be decomposed and rebuilt with different components which in turn can be further decomposed into various parts, joined in a simple structure.
- Composability - The modular system facilitates the production of elements which can be combined together to give the mould different characteristics.
- Comprehensibility - Some parts that make up the modular system can be identified by an observer, without said observer necessarily having to know the other parts of the system.
- Continuity - The system makes a small change in the system specification correspond to a an equally small change in implementation.
- The modular system according to the invention confines the effects to the inside of the module in which they occur, or at most to a limited number of modules.

Therefore these properties of the system according to the invention perfectly respect the principle of modularity and each module does not relate with other modules, thus giving the product different characteristics.

Further characteristics of the invention will be made clearer by the detailed description that follows, referring to a purely exemplary and therefore non limiting embodiment thereof, illustrated in the appended drawings, wherein:

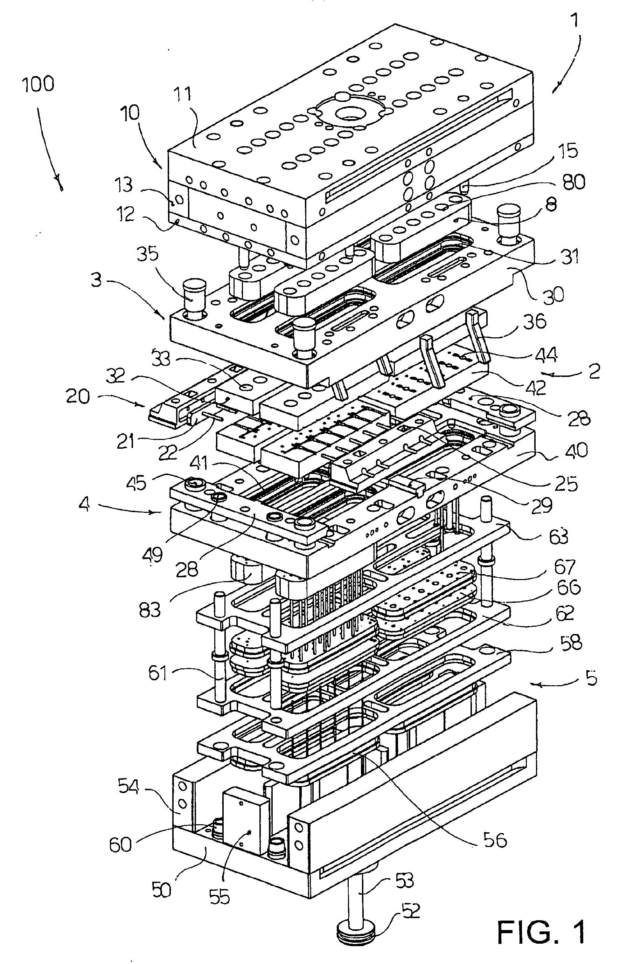

Figure 1 is an axonometric exploded view generally illustrating a modular system for moulds of injection moulding machines according to the invention;

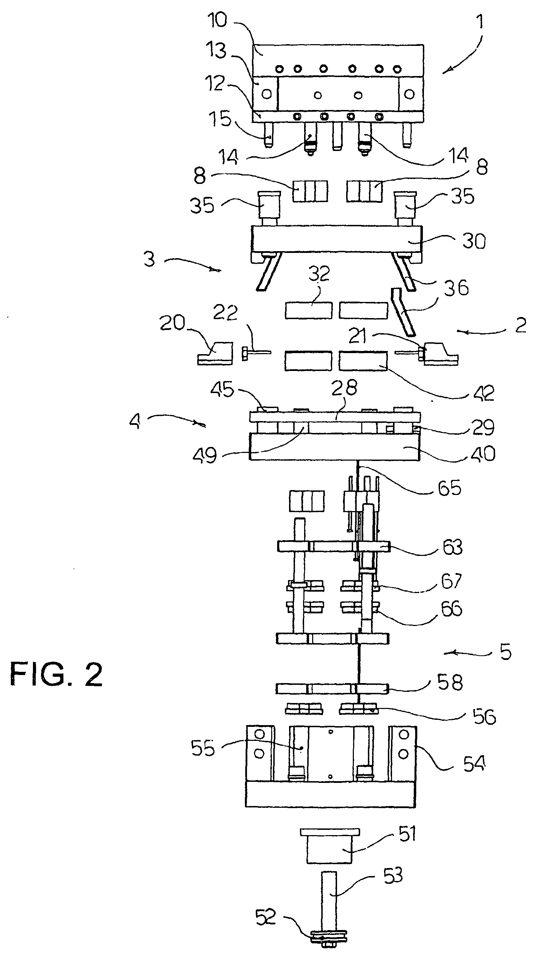

Figure 2 is a diagrammatic exploded side view, illustrating the various elements of the modular system of Figure 1;

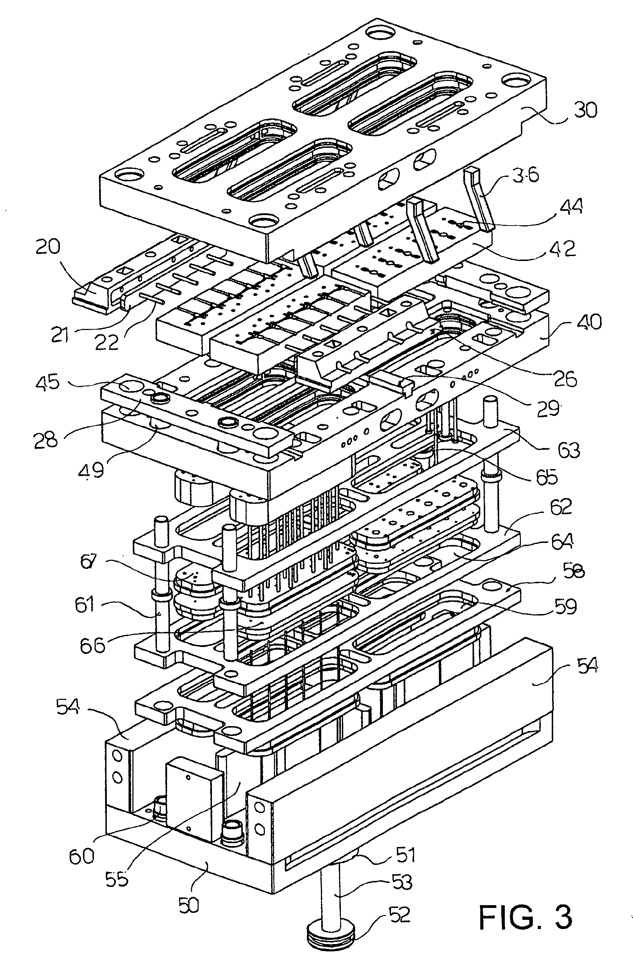

Figure 3 is an axonometric exploded view, illustrating the modular system of Figure 1 enlarged and wherein the injection assembly and the temperature conditioning inserts have been omitted;
Figure 4 is a sectional view of the modular system of Figure 1, assembled, in the mould open condition, and in the stage of ejection of the moulded item.

A modular system for moulds of injection moulding machines according to the invention, denoted as a whole by reference numeral 100, is described with the aid of the figures.

Purely by way of example the modular system 100 has been illustrated in the figures in a horizontal arrangement, it being understood that the modular system 100 can also be disposed in a vertical configuration for vertical presses.

The modular system 100 substantially comprises an injection assembly 1 for injection of the molten plastic material , a moulding assembly 2 for formation of the moulded item and an ejector assembly 5 for ejection of the moulded item from the moulding assembly 2.

The moulding assembly 2 comprises a mould consisting of a fixed mould half 3 integral with the injection assembly 1 and a mobile mould half 4 integral with the ejection assembly 5. The mobile mould half 4 moves horizontally from a mould closed position wherein the plastic is injected into the mould cavity for formation of the moulded item to a mould open position, wherein the item formed in the mould cavity is expelled through the intervention of the ejection assembly 5.

The injection assembly 1 comprises a plate structure 10 consisting of two rectangular plates 11 and 12 spaced apart form each other by spacers 13. A plurality of shutter nozzles 14 which protrude from the plate 12 of the injection assembly towards the mould are mounted in the plate structure 10.

The nozzles 14 are suitable for sprueless moulding and consist of injection nozzles having needle valves. Said nozzles 14 are interchangeable, can be small in size and very compact, and can be disposed in different positions to be able to adapt to different types of mould layout.

In the plate 12 of the plate structure 10 of the injection assembly there are provided centring pins 15 which protrude towards the mould for correct alignment of the nozzles 14. The centring pins 15 of the injection assembly engage in special holes made in a female mould plate 30 forming part of the fixed mould half 3.

The female mould plate 30 has in its surfaces facing towards the injection assembly a plurality of seats 31, for example four in number, able to receive respective heat-regulating inserts 8 having a substantially rectangular shape with rounded ends. Each insert 8 has a plurality of through holes 80, for example six in number, disposed in a row, to allow the passage of the nozzles 14. The inserts 8 are heat-regulated to control the injection temperature of the nozzles 14.

Seats are formed in the surface of the female mould plate 30 facing towards the mobile mould 4, for example four in number, disposed beneath the seats 31 of the temperature conditioning inserts 8, to receive the respective female mould inserts 32 which define the moulding matrix.

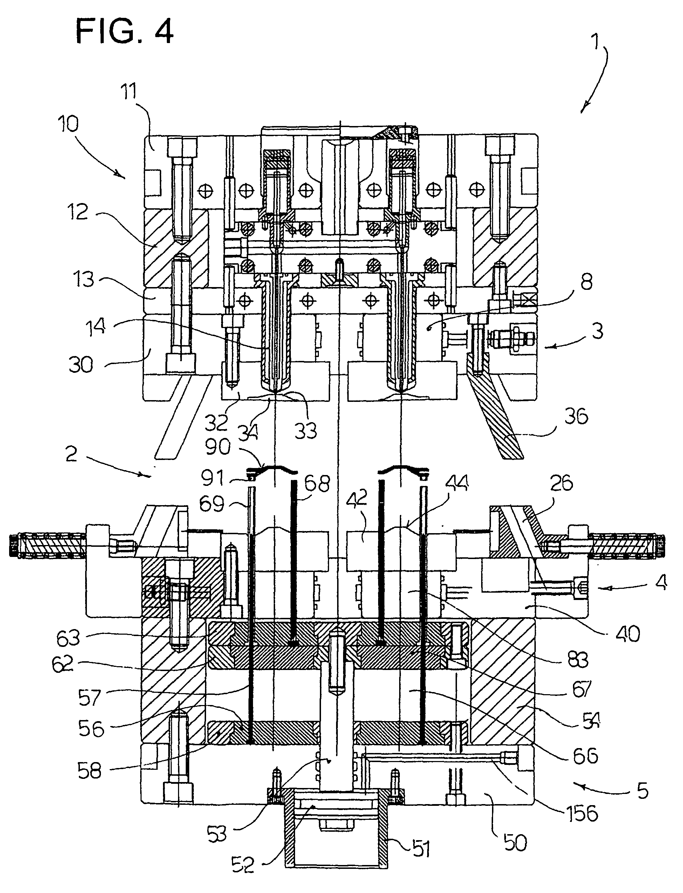

Each female mould insert 32 is substantially shaped as a rectangular plate and has, in the surface thereof facing towards the mobile mould half 4, a female cavity 34 (Figure 4) wherein the plastic material for formation of the moulded item will be injected. Accordingly, each female mould insert 32 has a plurality of through holes 33, for example six in number, disposed in a row, to allow injection of the plastic material by the nozzles 14 into the cavity of the female mould inserts 32. Consequently the holes 33 of the female mould inserts 32 will be aligned with the holes 80 in the heat-regulating inserts 8.

Four horizontal tiebars 35 are disposed at the four comers of the female mould plate 30. On each major side of the female mould plate 30, on the other hand, inclined tiebars 36 are provided, for example four in number on each side, which protrude outwardly sideways from the female mould plate 30.

The mobile mould half 4 comprises a male mould plate 40, substantially rectangular in shape, which has in the surface thereof facing the fixed mould half 3 a plurality of sets 41, for example four in number, able to receive respective male mould inserts 42 which define the moulding male to be coupled with the female cavity.

Each male mould insert 42 is shaped substantially as a rectangular plate and has in the surface thereof facing towards the fixed mould half a male protrusion 44 (Fig 4) which couples with the female cavity 34 of the respective female mould insert 32 to define a mould cavity wherein the plastic material for formation of the moulded item will be inj ected.

In the present description the terms male and female have been used purely by way of it example, it being understood that both the inserts 32 of the fixed mould half and the inserts 42 of the mobile mould half 4 can provides for cavities and/or protrusions, variously disposed and shaped.

Slides 20, four in number, are mounted on the major sides of the male mould plate 40, two on each major side. The slides 20 can translate transversally between two end guide elements 28 disposed at the opposite ends on the minor sides of the male mould plate and two intermediate guide elements 29 disposed in a median position on the major sides of the male mould plate.

Four bushes 45 which pass through the end guide elements 28 to engage with the horizontal tiebars 35 of the mould are integrated on the four comers of the male mould plate 40. In this manner the movable mould half 3 can translate guided on the tiebars 35.

Each slide 20 is connected to a respective male mould insert 42, by means of a connecting element 21 provided with a plurality of transverse pins 22 which engage in special seats in the side edge surface of the male mould insert 42. Each slide 20 has two slot-shaped seats 26 able to receive two respective inclined tiebars 36 of the female mould plate 30.

When the mould has to be opened the male mould plate 40 moves away from the female mould plate 30 (moving horizontally towards the left with reference to the Figures), thus the inclined tiebars 36 slide in the slots 26 of the slides consequently causing the slides 20 to move away from the ends of the male mould inserts 42. In this manner it is possible to eject from the male inserts 42 even items having undercut parts, which would otherwise be blocked in the respective inserts because of interference with the slides 20.

Heat-regulating inserts 83 are positioned in the surface of the male mould plate 40 facing towards the ejection assembly. Both the heat regulating inserts 83 and the male mould inserts 42 have a plurality of through holes aligned with each other for passage of the punches of the ejector assembly, for ejection of the moulded item, as will be described hereunder.

The ejection assembly 5 comprises a base plate 50 whereto is connected a pneumatic cylinder 51 wherein a piston consisting of a plunger 52 and a shaft 53 slides horizontally. The arrow F in Figure 4 indicates the direction of ejection pressure. A channel 156 is formed in the base plate for the passage of air to keep the plunger 52 in a retracted position during moulding.

On the base plate 50, two rests 54 are fixed to the longest sides and supports 55 are fixed in an intermediate position between the rests. The rests 54 and the supports 55 integrally support the male mould plate 40. In this manner the ejection assembly 5 is made integral with the movable mould half 4.

A first group of rear ejector plates 56, for example four in number, is disposed on the inner surface of the base plate 50, between the rests 54 and the supports 55. As shown in Figure 4, the rear ejection plates 56 have a plurality of seats for assembly of the horizontal guide shafts 57 of telescopic ejectors.

A rear table 58, which has a number of seats 59 able to receive the rear plates 56, is fixed to the base plate 50 so as to retain the rear ejector plates 56.

The ejection assembly has four horizontal tiebars 61 passing through the four comers of the rear table 58. Each tiebar 61 of the ejector assembly has one end engaged in a bush 60 integral with the base plate 50 and the other end engaged in another bush 49 integral with the male mould plate 40.

An intermediate table 62 and a front table 63, each having respective opposite seats 64, 65 to receive respectively a second group of intermediate plates 66 and a third group of front plates 67 are mounted horizontally slidably on the tiebars 61 of the ejector assembly. The intermediate and front tables 62, 63 are fixed to each other, so as to close the intermediate and front plates 66, 67 in a pack therebetween.

Furthermore, the intermediate and front tables 62, 63 are fixed to the shaft 53 (Figure 4) of the pneumatic piston, so as to be able to be moved horizontally along the tiebars 61 of the ejector assembly, by means of movement of the piston inside the cylinder 51.

The intermediate plates 66 have a plurality of through holes able to allow the passage of the guide shaft 57 of the telescopic ejector. The top plates 67, on the other hand, have a plurality of seats to house punch-shaped ejectors 68 and/or telescopic ejectors 69. The telescopic ejector has a sleeve 69 hollow on the inside which slides telescopically on the respective guide shaft 57.

In this manner operation of the shaft 53 of the piston 52 horizontally moves the intermediate and front tables 62, 63, together with the telescopic ejectors 69 and the punch ejectors 68, from a retracted position to a deployed position of ejection of the moulded item. The telescopic ejectors 69 and the punch ejectors 68 pass through the holes of the heat-regulating inserts 83 and the male inserts 42 to push the moulded item 90 (Figure 4) so as to eject it from the mould . It should be noted that if the moulded item has circular parts 91, it is preferable for the telescopic ejectors 69 to act in said circular parts 91.

Obviously, when production is changed the male and female mould inserts 42 and 32 which define the shape of the item to be moulded must be changed. Consequently, it may also be necessary to change the heat-regulating inserts 8, 83 to adapt them to the shape of the new inserts. Lastly it is necessary to change the arrangement of the nozzles 14 (for example activating only some of them) and of the ejectors 68, 69 according to the piece to be moulded. The plates 56, 66 and 67 of the ejector assembly may also be changed if necessary, as may the elements 21 connecting the slides 20 to the male mould inserts 42.

All the other parts, on the other hand (that is to say, the plate structure 10 of the injection assembly, the female mould plate 30 of the fixed mould half, the male mould plate 40 of the movable mould half, the tables 58, 62, 63, the base plate 50 and the cylinder-pneumatic piston assembly of the ejector assembly) which make up the structure of the modular system 100 remain unchanged.

Numerous variations and modifications of detail, within the reach of a person skilled in the art, can be made to the present embodiment of the invention, as set forth in the appended claims.

## Claims

1. A modular system (100) for moulds of injection moulding machines comprising:
- an injection assembly (1) provided with a plurality of nozzles (14) for injection of plastic material into the mould, '
- an ejection assembly (5) provided with a plurality of ejectors (68, 69) for ejection of the moulded item (90) from the mould,
- a mould (2) comprising a fixed mould half (3) associated with said injection assembly (1) and a movable mould half (4) associated with said ejection assembly (5) and movable from a mould closed position wherein the plastic material is injected into the mould to a mould open position wherein the item formed by the mould is ejected,
- female mould inserts (32) and male mould inserts (42) removably mounted in special seats formed respectively in a female mould plate (30) of the fixed mould half and in a male mould plate (40) of the movable mould half so as to be modularly composable and decomposable, according to the item to be moulded,
**characterised in that it further comprises:**
- first adapter means **(8)** disposed, interchangeably, between said injection assembly (1) and said fixed mould half (3) so as to allow the arrangement of said nozzles (14) of said injection assembly to be varied, and
- second adapter means **(56, 66, 67, 83)** disposed, interchangeably, between said ejection assembly (5) and said movable mould half (4) so as to allow the arrangement of said ejectors (68, 69) of the ejector assembly to be varied.

2. A modular system (100) according to claim 1, **characterised in that** said first **adapter means is a first heat-regulating insert (8)** and **that said** second adapter comprises a second heat-regulating insert **(83), whereby the heat regulating inserts (8, 83)** are removably mounted in special seats formed respectively in said female mould plate (30), on the surface facing towards the injection assembly (1), and in said male mould plate (40), on the surface facing towards the ejection assembly (5), said heat-regulating inserts (8, 83) being able to regulate the temperature of the moulded item (90) inside the mould.

3. A modular system (100) according to claim 2, **characterised in that**
- said first heat-regulating inserts (8) comprise a plurality of through holes (80) aligned with the through holes (33) of said female mould inserts (32) of the fixed mould half, to allow the passage of the nozzles (14) in said female mould inserts (32), and
- said second heat-regulating inserts (83) comprise a plurality of through holes disposed in register with through holes of said male mould inserts (42) of the movable mould half, to allow the passage of the ejectors (68, 69) in said male mould inserts (42).

4. A modular system (100) according to claim 2 or 3, **characterised in that** said second adapter means further comprise at least one group of ejector plates (56, 66, 67) removably mounted in a base plate (50) of said ejector assembly, said plates (56, 66, 67) being provided with a plurality of holes to retain and/or guide said ejectors (68, 69).

5. A modular system (100) according to claim 4, **characterised in that** it comprises:
- a first group of ejector plates (56) made integral with said base plate (50) of the ejector by means of a first table (58) fixed to said base plate (50),
- a second and third group of ejector plates (66, 67) packed together by means of a second and third table (62, 63) fixed to each other, and
- actuator means (51, 52, 53) connected to said second and third table (62, 63) to move them toward and away from said core plate (40) of the movable mould half.

6. A modular system (100) according to claim 5, **characterised in that** said actuator means comprise a pneumatic cylinder (51) mounted in said base plate (50) of the ejector assembly and a piston having a plunger (52) disposed in said pneumatic cylinder (51) and a shaft connected to said second and third table (62, 63).

7. A modular system (100) according to claim 5 or 6, **characterised in that** said ejectors of the ejector assembly comprise punch ejectors (68) and/or telescopic ejectors (69), the base of each ejector being blocked between said second and third group of ejector plates (66, 67), each telescopic ejector comprising a sleeve (69) hollow on the inside telescopically guided on a guide shaft (57), the base whereof being fixed to said first group of ejector plates (56).

8. A modular system (100) according to any one of claims 5 to 7, **characterised in that** said second and third table (62, 63) are guided in their movement towards and away from the male mould plate (40) of the movable mould half by means of four tiebars (61) disposed near the four corners of the second and third table (62, 63), each tiebar (61) having one end guided by a bush (60) integral with the base plate (50) of the ejector assembly and the other end guided by another bush (49) integral with the male mould plate (40) of the movable mould.

9. A modular system (100) according to any one of the preceding claims, **characterised in that** it comprises:
- a plurality of slides (20) mounted to slide sideways on said male mould plate (40) of the movable mould half, said slides comprising slots (26) able to be engaged by respective oblique tiebars (36) mounted on the side of said cavity plate (30) of the fixed mould half, so that on closure of the mould said slides (20) slide inwards, abutting against said male and female mould inserts (42, 32) and on opening of the mould said slides (20) slide outward moving away form said male mould inserts (42) to allow ejection of the moulded item, and
- a plurality of connecting elements (21) to connect said slides (20) to said male mould inserts (42), said connecting elements (21) being removably mounted in said slides (20) to be able to be interchangeable according to the type of male mould insert (42) used.

10. A modular system (100) according to any one of the preceding claims, **characterised in that** said nozzles (14) of the injection assembly comprise needle valves for sprueless injection.

## Patentansprüche

1. Modulares System (100) für Formen von Spritzgießmaschinen, das Folgendes umfasst:
- eine Einspritzbaugruppe (1), die mit mehreren Düsen (14) zum Einspritzen von Kunststoffmaterial in die Form versehen ist,
- eine Auswurfbaugruppe (5), die mit mehreren Auswerfern (68, 69) zum Auswerfen des geformten Gegenstandes (90) aus der Form versehen ist, und
- eine Form (2) mit einer unbeweglichen Formhälfte (3), die der Einspritzbaugruppe (1) zugeordnet ist, und einer beweglichen Formhälfte (4), die der Auswurfbaugruppe (5) zugeordnet ist und aus einer Form-geschlossen-Position, in der das Kunststoffmaterial in die Form eingespritzt wird, in eine Form-offen-Position, in der der Gegenstand, der durch die Form geformt wurde, ausgeworfen wird, bewegt werden kann,
- Matrizenformeinsätze (32) und Patrizenformeinsätze (42), die herausnehmbar in speziellen Sitzen montiert sind, die in einer Matrizenplatte (30) der unbeweglichen Formhälfte bzw. in einer Patrizenplatte (40) der beweglichen Formhälfte ausgebildet sind, so dass sie entsprechend dem zu formenden Gegenstand modular zusammengesetzt und zerlegt werden können,
**dadurch gekennzeichnet, dass** es des Weiteren Folgendes umfasst:
- erste Adaptermittel (8), die gegeneinander austauschbar zwischen der Einspritzbaugruppe (1) und der unbeweglichen Formhälfte (3) angeordnet sind, um es zu ermöglichen, dass die Anordnung der Düsen (14) der Einspritzbaugruppe verändert werden kann, und
- zweite Adaptermittel (56, 66, 67, 83) die gegeneinander austauschbar zwischen der Auswurfbaugruppe (5) und der beweglichen Formhälfte (4) angeordnet sind, um es zu ermöglichen, dass die Anordnung der Auswerfer (68, 69) der Auswerferbaugruppe verändert werden kann.

2. Modulares System (100) nach Anspruch 1, **dadurch gekennzeichnet, dass** das erste Adaptermittel ein erster wärmeregulierender Einsatz (8) ist und dass das zweite Adaptermittel einen zweiten wärmeregulierenden Einsatz (83) umfasst, wobei die wärmeregulierenden Einsätze (8, 83) herausnehmbar in speziellen Sitzen montiert sind, die in der Matrizenplatte (30), in der Fläche, die der Einspritzbaugruppe (1) zugewandt ist, bzw. in der Patrizenplatte (40), in der Fläche, die der Auswurfbaugruppe (5) zugewandt ist, ausgebildet sind, wobei die wärmeregulierenden Einsätze (8, 83) in der Lage sind, die Temperatur des geformten Gegenstandes (90) im Inneren der Form zu regulieren.

3. Modulares System (100) nach Anspruch 2, **dadurch gekennzeichnet, dass**
- die ersten wärmeregulierenden Einsätze (8) mehrere Durchgangslöcher (80) umfassen, die auf die Durchgangslöcher (33) der Matrizenformeinsätze (32) der unbeweglichen Formhälfte ausgerichtet sind, um das Hindurchführen der Düsen (14) in den Matrizenformeinsätzen (32) zu ermöglichen, und
- die zweiten wärmeregulierenden Einsätze (83) mehrere Durchgangslöcher umfassen, die in Übereinstimmung mit Durchgangslöchern der Patrizenformeinsätze (42) der beweglichen Formhälfte angeordnet sind, um das Hindurchführen der Auswerfer (68, 69) in den Patrizenformeinsätzen (42) zu ermöglichen.

4. Modulares System (100) nach Anspruch 2 oder 3, **dadurch gekennzeichnet, dass** die zweiten Adaptermittel des Weiteren mindestens eine Gruppe von Auswerferplatten (56, 66, 67) umfassen, die herausnehmbar in einer Grundplatte (50) der Auswerferbaugruppe montiert sind, wobei die Platten (56, 66, 67) mit mehreren Löchern versehen sind, um die Auswerfer (68, 69) zu halten und/oder zu führten.

5. Modulares System (100) nach Anspruch 4, **dadurch gekennzeichnet, dass** es Folgendes umfasst:
- eine erste Gruppe von Auswerferplatten (56), die integral mit der Grundplatte (50) des Auswerfers mittels einer ersten Scheibe (58), die an der Grundplatte (50) befestigt ist, ausgebildet ist,
- eine zweite und eine dritte Gruppe von Auswerferplatten (66, 67), die mittels einer zweiten und einer dritten Scheibe (62, 63), die aneinander befestigt sind, zusammengepackt sind, und
- Aktuatormittel (51, 52, 53), die mit der zweiten und der dritten Scheibe (62, 63) verbunden sind, um sie zu der Kernplatte (40) der beweglichen Formhälfte hin und von der Kernplatte (40) der beweglichen Formhälfte weg zu bewegen.

6. Modulares System (100) nach Anspruch 5, **dadurch gekennzeichnet, dass** die Aktuatormittel einen Druckluftzylinder (51), der in der Grundplatte (50) der Auswerferbaugruppe montiert ist, und einen Kolben umfassen, der einen Stößel (52), der in dem Druckluftzylinder (51) angeordnet ist, und einen Schaft, der mit der zweiten und der dritte Scheibe (62, 63) verbunden ist, aufweist.

7. Modulares System (100) nach Anspruch 5 oder 6, **dadurch gekennzeichnet, dass** die Auswerfer der Auswerferbaugruppe Durchstoßauswerfer (68) und/oder Teleskopauswerfer (69) umfassen, wobei die Basis jedes Auswerfers zwischen der zweiten und der dritten Gruppe von Auswerferplatten (66, 67) blockiert ist, wobei jeder Teleskopauswerfer eine Hülse (69) umfasst, die innen hohl ist und teleskopisch an einem Führungsschaft (57) geführt wird, dessen Basis an der ersten Gruppe von Auswerferplatten (56) befestigt ist.

8. Modulares System (100) nach einem der Ansprüche 5 bis 7, **dadurch gekennzeichnet, dass** die zweite und die dritte Scheibe (62, 63) in ihrer Bewegung zu der Patrizenplatte (40) der beweglichen Formhälfte hin und von der Patrizenplatte (40) der beweglichen Formhälfte fort mittels vier Zugstangen (61) geführt werden, die nahe den vier Ecken der zweiten und der dritten Scheibe (62, 63) angeordnet sind, wobei ein Ende jeder Zugstange (61) durch eine Buchse (60) geführt wird, die integral mit der Grundplatte (50) der Auswerferbaugruppe ausgebildet ist, und das andere Ende durch eine andere Buchse (49) geführt wird, die integral mit der Patrizenplatte (40) der beweglichen Form ausgebildet ist.

9. Modulares System (100) nach einem der vorangehenden Ansprüche, **dadurch gekennzeichnet, dass** es Folgendes umfasst:
- mehrere Gleitstücke (20), die so montiert sind, dass sie seitwärts auf der Patrizenplatte (40) der beweglichen Formhälfte gleiten können, wobei die Gleitstücke Schlitze (26) umfassen, die durch jeweilige schräge Zugstangen (36), die an der Seite der Hohlraumplatte (30) der unbeweglichen Formhälfte montiert sind, so in Eingriff genommen werden können, dass beim Schließen der Form die Gleitstücke (20) nach innen gleiten und gegen die Patrizenformeinsätze und Matrizenformeinsätze (42, 32) stoßen und beim Öffnen der Form die Gleitstücke (20) nach außen gleiten und sich von den Patrizenformeinsätzen (42) fort bewegen, um das Auswerfen des geformten Gegenstandes zu ermöglichen, und
- mehrere Verbindungselemente (21) zum Verbinden der Gleitstücke (20) mit den Patrizenformeinsätzen (42), wobei die Verbindungselemente (21) herausnehmbar in den Gleitstücken (20) montiert sind, damit sie entsprechend dem Typ des verwendeten Patrizeneinsatzes (42) gegeneinander austauschbar sind.

10. Modulares System (100) nach einem der vorangehenden Ansprüche, **dadurch gekennzeichnet, dass** die Düsen (14) der Einspritzbaugruppe Nadelventile für ein angussfreies Einspritzen umfassen.

## Revendications

1. Système modulaire (100) pour moules de machines à moulage par injection comprenant :
- un ensemble d'injection (1) muni d'une pluralité de gicleurs (14) pour l'injection de matériau plastique dans le moule,
- un ensemble d'éjection (5) muni d'une pluralité d'éjecteurs (68, 69) pour l'éjection de l'élément moulé (90) du moule,
- un moule (2) comprenant une moitié de moule fixe (3) associée au dit ensemble d'injection (1) et une moitié de moule mobile (4) associée au dit ensemble d'éjection (5) et mobile d'une position fermée de moule à laquelle le matériau plastique est injecté dans le moule à une position ouverte de moule à laquelle l'élément formé par le moule est éjecté,
- des inserts femelles de moule (32) et des inserts mâles de moule (42) montés de manière amovible dans des sièges spéciaux formés respectivement dans une plaque femelle de moule (30) de la moitié fixe de moule et dans une plaque mâle de moule (40) de la moitié mobile de moule de manière à être composable et décomposable de façon modulaire, en fonction de l'élément à mouler,
**caractérisé en ce qu'**il comprend en outre :
- des premiers moyens d'adaptateur (8) disposés, de manière interchangeable, entre ledit ensemble d'injection (1) et ladite moitié fixe de moule (3) de manière à permettre que l'agencement desdits gicleurs (14) dudit ensemble d'injection puisse varier, et
- des deuxièmes moyens d'adaptateur (56, 66, 67, 83) disposés, de manière interchangeable, entre ledit ensemble d'éjection (5) et ladite moitié mobile de moule (4) de manière à permettre que l'agencement desdits éjecteurs (68, 69) de l'ensemble d'éjecteurs puisse varier.

2. Système modulaire (100) selon la revendication 1, **caractérisé en ce que** lesdits premiers moyens d'adaptateur sont un premier insert de régulation thermique (8) et **en ce que** lesdits deuxièmes moyens d'adaptateur comprennent un deuxième insert de régulation thermique (83), moyennant quoi les inserts de régulation thermique (8, 83) sont montés de manière amovible dans des sièges spéciaux formés respectivement dans ladite plaque femelle de moule (30), sur la surface faisant face à l'ensemble d'injection (1), et dans ladite plaque mâle de moule (40), sur la surface faisant face à l'ensemble d'éjection (5), lesdits inserts de régulation thermique (8, 83) étant capables de réguler la température de l'élément moulé (90) à l'intérieur du moule.

3. Système modulaire (100) selon la revendication 2, **caractérisé en ce que**
- lesdits premiers inserts de régulation thermique (8) comprennent une pluralité de trous traversants (80) alignés avec les trous traversants (33) desdits inserts femelles de moule (32) de la moitié fixe de moule, pour permettre le passage des gicleurs (14) dans lesdits inserts femelles de moule (32), et
- lesdits deuxièmes inserts de régulation thermique (83) comprennent une pluralité de trous traversants disposés en registre avec les trous traversants desdits inserts mâles de moule (42) de la moitié mobile de moule, pour permettre le passage des éjecteurs (68, 69) dans lesdits inserts mâles de moule (42).

4. Système modulaire (100) selon la revendication 2 ou 3, **caractérisé en ce que** lesdits deuxièmes moyens d'adaptateur comprennent en outre au moins un groupe de plaques d'éjecteurs (56, 66, 67) montées de manière amovible dans une plaque de base (50) dudit ensemble d'éjecteurs, lesdites plaques (56, 66, 67) étant munies d'une pluralité de trous pour retenir et/ou guider lesdits éjecteurs (68, 69).

5. Système modulaire (100) selon la revendication 4, **caractérisé en ce qu'**il comprend :
- un premier groupe de plaques d'éjecteurs (56) rendu intégral à ladite plaque de base (50) de l'éjecteur au moyen d'une première table (58) fixée à ladite plaque de base (50),
- un deuxième groupe de plaques d'éjecteurs (66) et un troisième groupe de plaques d'éjecteurs (67) conditionnés ensemble au moyen d'une deuxième table (62) et d'une troisième table (63) fixées l'une à l'autre, et
- des moyens d'actionneur (51, 52, 53) connectés à ladite deuxième table (62) et à ladite troisième table (63) pour les déplacer en direction et à l'écart de ladite plaque de base (40) de la moitié mobile de moule.

6. Système modulaire (100) selon la revendication 5, **caractérisé en ce que** lesdits moyens d'actionneur comprennent un cylindre pneumatique (51) monté dans ladite plaque de base (50) de l'ensemble d'éjecteurs et un piston ayant un plongeur (52) disposé dans ledit cylindre pneumatique (51) et un arbre connecté à ladite deuxième table (62) et à ladite troisième table (63).

7. Système modulaire (100) selon la revendication 5 ou la revendication 6, **caractérisé en ce que** lesdits éjecteurs de l'ensemble d'éjecteurs comprennent des éjecteurs perforants (68) et/ou des éjecteurs télescopiques (69), la base de chaque éjecteur étant bloquée entre ledit deuxième groupe (66) et ledit troisième groupe de plaques d'éjecteurs (67), chaque éjecteur télescopique comprenant une douille (69) creuse à l'intérieur guidée de manière télescopique sur un arbre de guidage (57), dont la base est fixée au dit premier groupe de plaques d'éjecteurs (56).

8. Système modulaire (100) selon l'une quelconque des revendications 5 à 7, **caractérisé en ce que** ladite deuxième table (62) et ladite troisième table (63) sont guidées dans leur mouvement en direction et à l'écart de la plaque mâle de moule (40) de la moitié mobile de moule au moyen de quatre barres de liaison (61) disposées à proximité des quatre coins de la deuxième table (62) et de la troisième table (63), chaque barre de liaison (61) ayant une extrémité guidée par une bague (60) intégrale à la plaque de base (50) de l'ensemble d'éjecteurs et l'autre extrémité guidée par une autre bague (49) intégrale à la plaque mâle de moule (40) du moule mobile.

9. Système modulaire (100) selon l'une quelconque des revendications précédentes,
**caractérisé en ce qu'**il comprend :
- une pluralité de coulisseaux (20) montés pour coulisser latéralement sur ladite plaque mâle de moule (40) de la moitié mobile de moule, lesdits coulisseaux comprenant des encoches (26) capables d'être mises en prise par des barres de liaison obliques respectives (36) montées sur le côté de ladite plaque de cavité (30) de la moitié fixe de moule, de sorte que, à la fermeture du moule, lesdits coulisseaux (20) coulissent vers l'intérieur, en s'aboutant contre lesdits inserts mâles et femelles de moule (42, 32) et, à l'ouverture du moule, lesdits coulisseaux (20) coulissent vers l'extérieur en s'écartant desdits inserts mâles de moule (42) pour permettre l'éjection de l'élément moulé, et
- une pluralité d'éléments de connexion (21) pour connecter lesdits coulisseaux (20) aux dits inserts mâles de moule (42), lesdits éléments de connexion (21) étant montés de manière amovible dans lesdits coulisseaux (20) pour pouvoir être interchangeables en fonction du type d'insert mâle de moule (42) utilisé.

10. Système modulaire (100) selon l'une quelconque des revendications précédentes, **caractérisé en ce que** lesdits gicleurs (14) de l'ensemble d'injection comprennent des soupapes à pointeau pour une injection sans carotte.
